# EUROPEAN PATENT SPECIFICATION

(11) **EP 2 848 431 B1**
(45) Date of publication and mention of the grant of the patent: **16.05.2018**
(21) Application number: 13787543.1
(22) Date of filing: 22.03.2013
(51) Int. Cl.: B60C 5/14

(54) **PNEUMATIC TIRE**
LUFTREIFEN
BANDAGE PNEUMATIQUE

(30) Priority: 08.05.2012 JP 2012107042
(43) Date of publication of application: 18.03.2015
(73) Proprietor: The Yokohama Rubber Co., Ltd., Minato-ku Tokyo 105-8685 (JP)
(72) Inventor: SETO, Hideki, Hiratsuka-shi Kanagawa 254-8601 (JP); HASHIMURA, Yoshiaki, Hiratsuka-shi Kanagawa 254-8601 (JP); MATSUDA, Jun, Hiratsuka-shi Kanagawa 254-8601 (JP); ENDO, Toyoaki, Hiratsuka-shi Kanagawa 254-8601 (JP); KOISHIKAWA, Yoshifumi, Hiratsuka-shi Kanagawa 254-8601 (JP); SHIBAI, Takashi, Hiratsuka-shi Kanagawa 254-8601 (JP)
(74) Representative: Dilg, Haeusler, Schindelmann Patentanwaltsgesellschaft mbH
(86) International application number: PCT/JP2013/058345
(87) International publication number: WO 2013/168473

(56) References cited:
- CN-A- 101 511 610
- JP-A- H1 016 082
- JP-A- 2007 229 941
- JP-A- 2010 269 734

## Description

### TECHNICAL FIELD

The present invention relates to a pneumatic tire.

More specifically, the present invention relates to a pneumatic tire with excellent durability that has an overlap splice portion in which an inner liner formed from a film whose main component is thermoplastic resin is adhered to an inner side of a carcass layer of a tire via a tie rubber layer and end portions in a tire circumferential direction of the film overlap via a tie rubber across a tire width direction, wherein a crack is not generated near the splice portion of the overlap spliced inner liner, after the pneumatic tire has started traveling.

### BACKGROUND

In recent years, proposals and considerations have been made to use a film whose main component is thermoplastic resin as an inner liner of a pneumatic tire (Patent Document 1).

When actually using this film whose main component is thermoplastic resin as the inner liner of the pneumatic tire, normally, a manufacturing method adopted is to wind onto a tire molding drum a laminated sheet in which a film whose main component is thermoplastic resin and a tie rubber sheet vulcanization bonded to the film are laminated, form a lap splice, and then provide it to the tire vulcanization molding process.

However, when a tire is manufactured by drawing out from a roll form and cutting to the required length the laminated sheet formed from film with thermoplastic resin as the main component and tie rubber layer, that is wound in roll form, then winding it onto the tire molding drum and carrying out overlap splicing on the drum, and the like, and then performing vulcanization molding, separation may occur between the film whose main component is thermoplastic resin that constitutes the inner liner, and the tie rubber layer that is vulcanization bonded to the film, after the tire has started traveling.

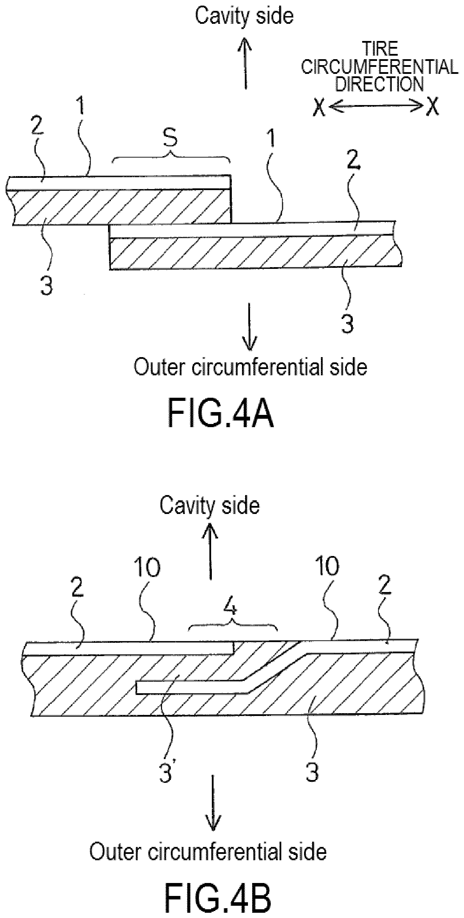

To describe this with the drawings, as illustrated in FIG. 4A, a laminated sheet 1 formed from film 2 whose main component is thermoplastic resin and a tie rubber layer 3 is cut to a required size (length) with a cutting tool, and overlap splice is formed by being overlapped so as to form an annular shape by providing a splice portion S at both end portions thereof on a tire molding drum. When one laminated sheet 1 is used, both end portions are overlap spliced so that an annular shape is formed, or, when a plurality of the laminated sheets 1 is used, mutual end portions of each are overlap spliced and connected together so that one annular shape is formed.

Next, other parts (not illustrated) required for tire manufacturing are wound and the tire undergoes vulcanization molding with a bladder. After the vulcanization molding, as illustrated schematically in FIG. 4B, an inner liner 10 is formed from the film 2 whose main component is thermoplastic resin, and the overlap splice portion is formed by the film 2 whose main component is thermoplastic resin being overlapped via a tie rubber 3' at a portion where the film 2 whose main component is thermoplastic resin is exposed to a cavity side and a portion where the film 2 whose main component is thermoplastic resin is embedded in the tie rubber layer 3 on a tire outer circumferential side near the overlap splice portion. In FIG. 4, a tire cavity side is upward, a tire outer circumferential side is downward, and the X-X direction is a tire circumferential direction.

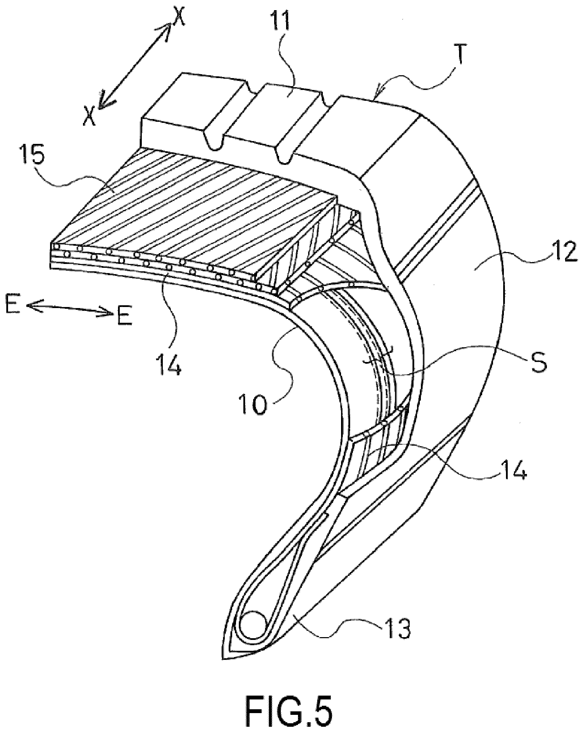

That is, a pneumatic tire T is formed by end portions in the tire circumferential direction of the film 2 having a splice portion overlapped via the tie rubber 3' across a tire width direction and the splice portion being present across a tire width direction E-E (FIG. 5).

Furthermore, the phenomenon where the film 2 described above whose main component is thermoplastic resin and the tie rubber layer 3 that is vulcanization bonded to the film 2 separate occurs in particular where the film 2 whose main component is thermoplastic resin illustrated in FIG. 4B is exposed and at a tip portion vicinity 4 thereof, and a crack occurs first.

### PRIOR ART DOCUMENT

### PATENT DOCUMENT

Patent Document 1: Japanese Unexamined Patent Application Publication No. 2009-241855A
Document JP2007229941 shows a pneumatic tire according to the preamble of claim 1.

### SUMMARY OF THE INVENTION

### Problems to be Solved by the Invention

As a result of various research concerning a cause of the film sheet 2 whose main component is thermoplastic resin that constitutes the inner liner 10 and the tie rubber layer 3 that is vulcanization bonded to the film 2 separating from each other, which is a disadvantage of the pneumatic tire manufactured by the conventional method as described above, the present inventors obtained the finding below.

That is, it is considered that when the laminated sheet 1 described above is prepared in the normal method, near the splice portion S of both ends of the laminated sheet 1 illustrated in FIGS. 4A, 4B, a large stress is generated on the tie rubber 3' sandwiched on top and bottom by the film 2 that is present above and below, whose main component is thermoplastic resin, and whose rigidity is large, and thus generation of the crack arises in the tip portion vicinity 4 of the film 2 whose main component is thermoplastic resin.

In view of points such as described above, an object of the present invention is to provide a tire with excellent durability that has an overlap splice portion in which an inner liner formed from a film whose main component is thermoplastic resin is adhered to an inner side of a carcass layer of a tire via a tie rubber layer and end portions in a tire circumferential direction of the film overlap via a tie rubber across a tire width direction, wherein a crack is not generated near an overlap splice portion of an inner liner layer, after the pneumatic tire has started traveling.

### Means To Solve The Problem

A pneumatic tire of the present invention that achieves the aforementioned object is configured from a configuration (1) below.
(1) A pneumatic tire that has an overlap splice portion in which an inner liner formed from a film whose main component is thermoplastic resin is adhered to an inner side of a carcass layer of a tire via a tie rubber sheet and end portions in a tire circumferential direction of the film overlap via a tie rubber across a tire width direction, wherein the pneumatic tire satisfies three requirements of:
   (a) a surface on a tire cavity side of a film positioned on a tire cavity side in the overlap splice portion being formed with a recess so that a film thickness at the overlap splice portion becomes thinner than a film thickness of portions other than the overlap splice portion;
   (b) a surface on a tire outer circumferential side of the film positioned on the tire cavity side in the overlap splice portion being formed flat between the overlap splice portion and the portions other than the overlap splice portion; and
   (c) a surface on the tire cavity side and a surface on the tire outer circumferential side of the film positioned on the tire outer circumferential side in the overlap splice portion being formed flat between the overlap splice portion and the portions other than the overlap splice portion.

   Furthermore, it is preferable that this pneumatic tire of the present invention is configured from any of configurations (2) to (5) below.
(2) The pneumatic tire according to (1) above, wherein with the recess formed on the surface on the tire cavity side of the film positioned on the tire cavity side in the overlap splice portion of (a) above, a thickness of the film at the overlap splice portion is formed to be from 20 to 80% of a thickness of the film of the portions other than the overlap splice portion.
(3) The pneumatic tire according to (1) or (2) above, wherein an overlap length in a circumferential direction of the overlap splice portion is from 3 to 30 mm.
(4) The pneumatic tire according to any of (1) to (3) above, wherein a surface area of a portion formed with the recess on the surface on the tire cavity side of the film positioned on the tire cavity side in the overlap splice portion is 10% or more and 100% or less than a surface area of the overlap splice portion.
(5) The pneumatic tire according to any of (1) to (4) above, wherein the portion formed with the recess on the surface on the tire cavity side of the film positioned on the tire cavity side in the overlap splice portion is present at least between a belt end portion and an end portion in the outer circumferential side of a bead filler portion on a tire meridian section.
(6) The pneumatic tire according to any of (1) to (5) above, wherein the recess is formed by a process using a laser light.

According to the present invention according to claim 1, the pneumatic tire with excellent durability without generating a crack in the film whose main component is thermoplastic resin that forms the inner liner and the tie rubber sheet that is vulcanization bonded to the film whose main component is thermoplastic resin, after the tire has started traveling, can be provided.

According to the pneumatic tire of the present invention according to any of claims 2 to 6, it is possible to obtain the effect of the present invention according to claim 1, and in addition, to obtain the effect more reliably and to a greater extent.

### BRIEF DESCRIPTION OF THE DRAWINGS

- FIGS. 1A,: 1B schematically illustrate a working example of a pneumatic tire of the present invention; FIG. 1A is a side cross-sectional view near an overlap splice portion, and FIG. 1B is a plan view thereof.
- FIGS. 2A,: 2B are explanatory views schematically illustrating a state where a working example of the pneumatic tire of the present invention is overlapped before tire vulcanization molding and are side cross-sectional views near a splice portion.
- FIGS. 3A: and 3B are explanatory views schematically illustrating a state where another working example of the pneumatic tire of the present invention is overlapped before tire vulcanization molding, and each illustrate a side cross-sectional view near an overlap splice portion on the left side and a plan view thereof on the right side.
- FIGS. 4A: and 4B are explanatory views of the problems in conventional technology, FIG. 4A is a schematic view illustrating a laminated sheet in which a film whose main component is thermoplastic resin and a tie rubber which is vulcanization bonded to the film whose main component is thermoplastic resin are laminated is cut to a required length, wound around a tire molding drum, and both end portions of a laminated sheet 1 are overlap spliced, FIG. 4B is a schematic view illustrating the form depicted in FIG. 4A after vulcanization molding processing of the tire.
- FIG. 5: is a partially fragmented perspective view illustrating an example of an embodiment of the pneumatic tire according to the present invention.
- FIG. 6: is a cross-sectional view in a tire meridian direction that describes the pneumatic tire according to the present invention and schematically illustrates a region Z where it is favorable to provide a recess that is formed thinner than a film thickness of portions other than the overlap splice portion on a tire cavity side top surface of a film on a tire cavity side in the overlap splice portion, the overlap splice portion being present across an entire width in a tire width direction E-E.

### BEST MODE FOR CARRYING OUT THE INVENTION

A detailed explanation of the pneumatic tire of the present invention will be given below.

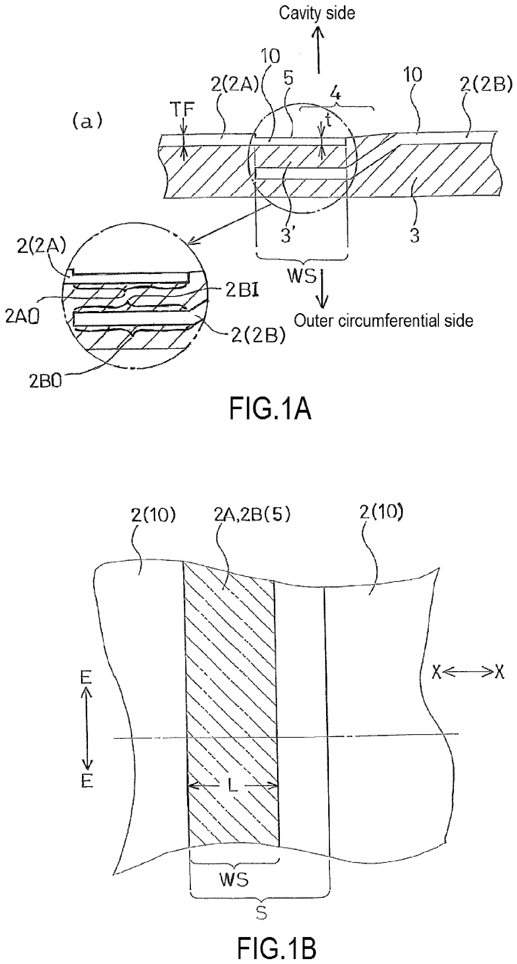

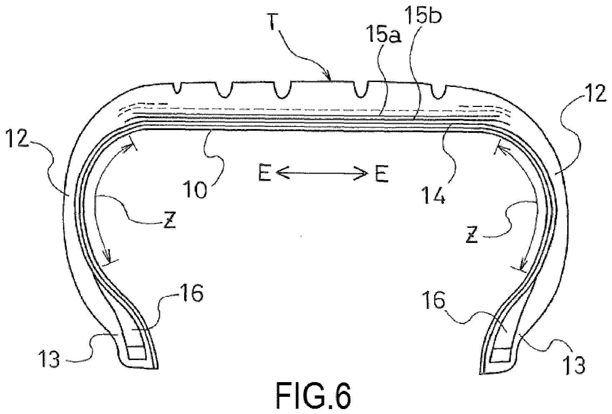

As illustrated in FIG. 1, the pneumatic tire of the present invention is a pneumatic tire that has an overlap portion WS in which an inner liner 10 formed from a film 2 whose main component is thermoplastic resin is adhered to an inner side of a carcass layer (not illustrated in FIG. 1; 14 in FIGS. 5 and 6) of a tire via a tie rubber layer 3 and end portions in the tire circumferential direction of the film 2 overlap via a tie rubber 3' across a tire width direction, wherein the pneumatic tire satisfies the three requirements (a) to (c) below:
(a) a surface on a tire cavity side of a film 2A positioned on a tire cavity side in the overlap splice portion WS is formed with a recess 5 so that a film thickness at the overlap splice portion WS becomes thinner than a film thickness of portions other than the overlap splice portion WS;
(b) a surface on a tire outer circumferential side of the film 2A positioned on the tire cavity side in the overlap splice portion WS is formed flat between the overlap splice portion WS and the portions other than the overlap splice portion WS; and
(c) a surface on a tire cavity side and a surface on a tire outer circumferential side of a film 2B positioned on the tire outer circumferential side in the overlap splice portion WS are formed flat between the overlap splice portion WS and the portions other than the overlap splice portion WS.

In FIG. 1, 5 is the recess in (a) above; as indicated by the diagonal two-dot chain lines in FIG. 1B, the recess 5 is formed on an entire surface of the overlap splice portion WS as a recess exhibiting one step on the surface on the tire cavity side of the film 2A positioned on the tire cavity side in the overlap splice portion WS, and at the overlap splice portion WS, a thickness of the film 2A is formed thinner than a thickness of the film 2 in the portions other than the overlap splice portion WS.

Meanwhile, the surface on the tire outer circumferential side of the film 2A positioned on the tire cavity side in the overlap splice portion WS is formed flat between the overlap splice portion WS and the portions other than the overlap splice portion WS (FIG. 1A), and the recess is not formed. Moreover, the surface on the tire cavity side and the surface on the tire outer circumferential side of the film 2B positioned on the tire outer circumferential side in the overlap splice portion WS are formed flat between the overlap splice portion WS and the portions other than the overlap splice portion WS.

That is, with the pneumatic tire of the present invention, of a total four surfaces of the two surfaces of the film 2A on the tire cavity side and the two surfaces of the film 2B on the tire outer circumferential side positioned in the overlap splice portion WS, only the surfaces on the tire cavity side of the film 2A are applied with a recess forming process.

Here, "recess" in the present invention refers to a concave portion formed continuously or discontinuously and entirely or partially in the tire circumferential direction and/or the tire width direction on the surface on the cavity side of the film 2A so that the thickness of the film 2A becomes partially thin. Because this "recess" is a "concave portion," it does not include a through-hole.

In the present invention, the "surface of the film being formed flat between the overlap splice portion WS and the portions other than the overlap splice portion WS" means that at the overlap splice portion WS, the recess is not formed at any location on the film surface. That is, as illustrated by partially enlargement in FIG. 1A, the "surface on the tire outer circumferential side of the film 2A positioned on the tire cavity side" (2AO) of requirement (b) described above is formed flat by remaining as an original surface had by the film 2. Moreover, the "surface on the tire cavity side of the film 2B positioned on the tire outer circumferential side" (2BI) and the "surface on the tire outer circumferential side of the film 2B positioned on the tire circumferential side" (2BO) of requirement (c) described above are also formed flat by remaining as original surfaces had by the film 2.

According to the present invention, by providing a structure of the overlap splice portion WS such as described above, a crack is not generated in the tie rubber sheet that is vulcanization bonded to the film whose main component is thermoplastic resin, and excellent running durability is exhibited.

With a mechanism thereof, in the pneumatic tire of the present invention, because the surface on the tire cavity side of the film 2A is applied with the recess forming process, an overall rigidity of the overlap splice portion WS becomes extremely small, a difference between distortions generated at the overlap splice portion WS and the portions that are not overlap spliced becomes small, and a shear force generated by this difference between distortions becomes small. This shear force is generated between the film on the cavity side and a tie rubber portion, and the thinner the film on the cavity side, the less a force of curling and peeling. By this, generation of the crack of the tie rubber at the overlap splice portion can be remarkably mitigated and the pneumatic tire with excellent durability can be obtained.

In particular, in the position of the overlap splice portion WS, a total of three surfaces of the surface on the outer circumferential side of the film 2A positioned on the tire cavity side and the two surfaces on the cavity side and the outer circumferential side of the film 2B positioned on the tire outer circumferential side form a joining interface with the tie rubber sheet 3, but because these three surfaces being joined to the tie rubber sheet 3 in a state where recesses are formed in these three surfaces worsens adhesion to the tie rubber portion during tire molding due to uneven portions of the film, a manufacturing failure is generated where the film and the tie rubber portion separate during tire molding in the splice portion WS.

That is, this is generally not preferable because this invites stress concentration at an origin of a recessed portion, near the step, and the like or makes a uniform adhered state between the film and the tie rubber sheet less likely to be obtained, which in turn becomes a cause of potentially inducing curling and peeling during molding.

Furthermore, for example, a situation such as forming the recess on a film top surface by an irradiation process of a laser light is not preferable, according to findings of the present inventors, because the recessed portion formed by this processing method cannot exhibit a high joining force to the tie rubber sheet 3 (the joining force decreases at a portion where irradiation of the laser light is received), and due to this, curling and peeling are induced; it is important that the three surfaces are formed to remain flat in the same manner as the portions other than the overlap splice portion WS to make a junction between the film surface and the tie rubber sheet 3 firm and reduce induction of curling and peeling.

As illustrated in FIG. 1A, with the recess formed on the surface on the tire cavity side of the film 2A positioned on the tire cavity side in the overlap splice portion WS of requirement (a) above, a thickness t of the film 2A at the overlap splice portion WS being formed to be from 20 to 80% of an original thickness TF of the film of the portions other than the overlap splice portion is preferable in obtaining the effect of the invention reliably and to a greater extent. Making the thickness t of the film 2A at the WS portion too thin is not preferable because the crack is more likely to be generated as a result thereof and an effect of overlapping and splicing is reduced.

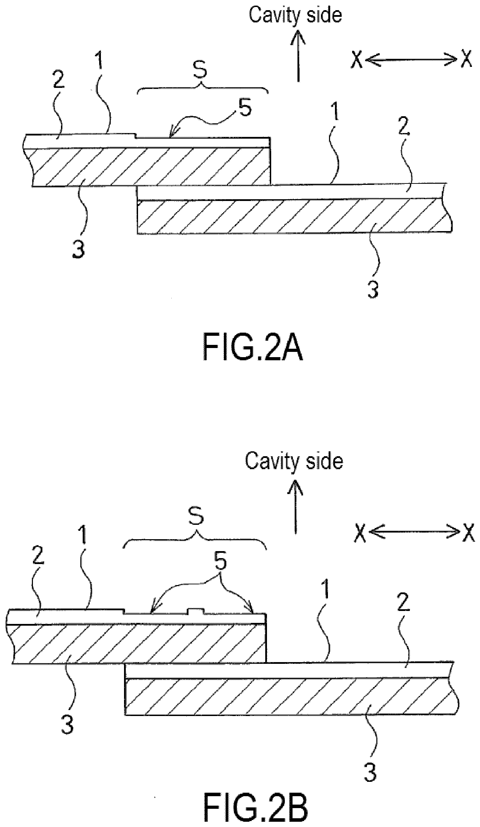

As illustrated in FIG. 2A, the recess formed on the surface on the tire cavity side of the film 2A positioned on the tire cavity side in the overlap splice portion WS, when viewed in the tire circumferential direction, may be formed with 100% of a total surface area of a surface area of the overlap splice portion WS but may also be about from 40 to 80% in terms of a surface area ratio. According to the findings of the present inventors, while depending on a depth of the recess, the recess is preferably formed to be 60% or more and 100% or less in terms of the surface area ratio to the surface area of the overlap splice portion WS. 80% or more and 100% or less is more preferable. This is because even if the recess is formed at a partial region relative to the surface area of the overlap splice portion WS, the rigidity of the overlap splice portion WS can be effectively decreased and the effect of the invention can be obtained. An example where the recess is not formed with 100% of the total surface area of the surface area of the overlap splice portion WS is illustrated in FIG. 2B.

Furthermore, a tire circumferential direction length of the recessed portion 5 of the film 2A is preferably formed to be a length substantially equal to a length L (FIG. 1B) of the overlap portion WS (100% in terms of the surface area ratio to the surface area of the overlap splice portion WS) but, from a viewpoint of productivity and the like, may be formed to somewhat exceed the length L of the overlap splice portion WS or be less than the length L, may specifically be formed to be within about +15% of the length L, and may preferably be configured to be within about +10% of the length L. When being formed to be less than the length L, the tire circumferential direction length of the recessed portion 5 of the film 2A is preferably formed to be 60% or more and 100% or less in terms of a to-L ratio, which is a numerical value similar to the surface area ratio of WS described above, and more preferably 80% or more and 100% or less. When not forming the recess in the entire region of the overlap splice portion WS, the recessed portion is preferably formed in a position toward a tip portion of the film 2A.

Furthermore, the recess 5 being of a shape where the X-X cross-sectional shape in the tire circumferential direction is becoming thinner in a stepwise manner as illustrated in FIG. 2A is preferable in being able to exhibit the effect reliably and to a greater extent. The stepwise shape illustrated in FIG. 2A is a stepwise shape of one step but may be of a plurality of steps.
The example illustrated in FIG. 2B is an example where the recess is not formed in the entire region of the overlap splice portion WS but formed by being split into two.

The shape of the recess 5, as a shape viewed from a plan view direction, may be formed to be one type or a plurality of types among various shapes such as a quadrate shape such as a square shape or a rectangular shape, circular shapes or elliptical shapes such as a dotted pattern, an annular shape (donut shape), or a polygonal shape.

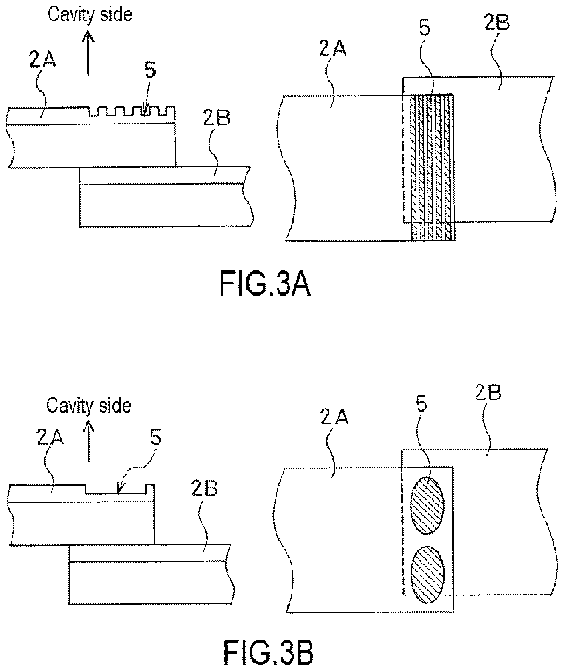

Similarly to FIG. 2, FIGS. 3A and 3B describe another example of the shape of the recess 5 by schematically illustrating a state of being overlapped before tire vulcanization molding; in FIGS. 3A and 3B respectively, a side cross-sectional view near the overlap splice portion is illustrated on the left side and a plan view thereof is illustrated on the right side. FIG. 3A illustrates an example of a plurality of thin stripe shapes running parallel to each other in the tire width direction, and FIG. 3B illustrates an example of the elliptical shapes being lined up in one row in the tire width direction. Even when partial in this manner, the desired effect can be obtained by regularly forming the recess 5.

The length in the circumferential direction of the overlap splice portion WS is preferably from 3 to 30 mm. Being less than 3 mm is not preferable because a force of splicing is small, and exceeding 30 mm is not preferable because a uniformity of the tire may be worsened.

The process of forming the recess by thinning the film can be performed by, for example, performing laser processing in the tire width direction on a predetermined surface of the film (surface on the cavity side of the film 2A) or the like at a step where the film is a single unit before being laminated with the tie rubber sheet or a step after being laminated. That is, forming the recess 5 can be performed by, for example, a processing method of irradiating the laser light from a perpendicular direction of the film sheet surface onto the film sheet surface and moving the laser light in a plane direction of a film sheet material or the like, and this process using the laser light is preferable in that it is a non-contact method. Irradiation of the laser light may be performed continuously while moving or may be performed intermittently while moving. In particular, the processing method that irradiates the laser light is most suitable because the depth of the recess that is formed and the thickness of the film cam be adjusted by adjusting a moving speed and a strength of laser light irradiation. It is preferable to use an infrared laser or a CO₂ (carbon dioxide gas) laser as the laser light, and among these, using the CO₂ (carbon dioxide gas) laser is preferable in favorability of workability, controllability, and the like. While it seems to be depending on a material of the film sheet material, a YAG laser is often inferior to those above in terms of workability, controllability, and the like. When performing recess formation processing using the laser light, it is not necessarily required to process without a gap an entire surface area of a processing region, and the entire area may be process treated so as to leave a partial gap in the entire region of the processing region, as in the "line drawing". When forming the recess on a region having a surface area of some extent by using the laser light as in the "line drawing", a processing width (line width) of the processing by the laser light is preferably made to be about from 0.2 to 1 mm.

Because the present invention does not form the recess on the joining interface with the tie rubber sheet, another advantage thereof is being able to process the film top surface after being laminated with the tie rubber sheet. Because of this, being able to easily perform recess formation processing at only a desired surface area on the end portion region of the film top surface after lamination by the laser light as in the "line drawing" described above is a great advantage.

While not limited in particular, it is preferable to use a film of a thickness of 30 to 300 µm as the film 2 used in the present invention, and it is preferable to use a tie rubber sheet of a thickness of 0.2 to 1.2 mm.

FIG. 5 is a partially fragmented perspective view illustrating an example of an embodiment of the pneumatic tire according to the present invention.

A pneumatic tire T is provided so that side wall portions 12 and bead portions 13 communicate on the left and right with a tread portion 11. On the tire inner side thereof, a carcass layer 14 that acts as a framework for the tire is provided so as to extend between the left and right bead portions 13, 13 in the tire width direction. Two belt layers 15 composed of steel cords are provided on the outer circumferential side of the carcass layer 14 corresponding to the tread portion 11. The arrow E indicates the tire width direction, and the arrow X indicates the tire circumferential direction. The inner liner layer 10 is disposed on an inner side of the carcass layer 14, and a splice portion S thereof is present extending in the tire width direction.

With the pneumatic tire according to the present invention, the durability is improved remarkably by generation of the crack that is conventionally more likely to arise near this splice portion S on a tire inner circumferential surface, generation of the crack between the sheet 2 whose main component is thermoplastic resin that forms the inner liner 10 and the tie rubber layer 3, and generation of peeling being suppressed.

The overlap splice portion WS is present across an entire width of the tire, but the recess 5 of the film 2A does not need to be provided across the splice portion of the entire width of the tire and is preferably present in a "region between an end portion of a belt 15b with greater width and a tip portion of a bead filler 16"indicated by a region Z in FIG. 6. In particular, a shoulder portion vicinity deforms greatly during running, and because of this, the cracks of the film and the tie rubber are more likely to arise, and it is preferable to provide the shoulder portion vicinity, including the sidewall portion, in at least the region Z.

The "film whose main component is thermoplastic resin" that forms the inner liner in the present invention refers representatively and collectively to a film configured from "thermoplastic resin" or a film configured from a "thermoplastic elastomer composition that while maintaining the thermoplastic resin as the main component blends an elastomer in the resin." Even if the latter, the main component is thermoplastic resin, and the film whose main component is thermoplastic resin has a characteristic of generally having a large rigidity compared to a sheet of 100% rubber or the like. Because of this, as a configuration of the present invention described above, protecting a splice portion vicinity of the inner liner is important in lengthening a life of the pneumatic tire.

The thermoplastic resin and elastomer that can be used in the present invention will be described below.

The thermoplastic resin to be used in the present invention is preferably a polyamide resin, [e.g., nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 9T, nylon 6/6T copolymer, nylon 66/PP copolymer, nylon 66/PPS copolymer] and an N-alkoxyalkyl compound thereof, e.g., a methoxymethyl compound of nylon 6, a methoxymethyl compound of a nylon 6/610 copolymer, or a methoxymethyl compound of nylon 612; a polyester resin [e.g., an aromatic polyester such as polybutylene terephthalate (PBT), polyethylene terephthalate (PET), polyethylene isophthalate (PEI), a PET/PEI copolymer, polyarylate (PAR), polybutylene naphthalate (PBN), a crystal polyester, a polyoxyalkylene diimide acid/polybutylene terephthalate copolymer]; a polynitrile resin [e.g., polyacrylonitrile (PAN), polymethacrylonitrile, an acrylonitrile/styrene copolymer (AS), a (meta)acrylonitrile/styrene copolymer, a (meta)acrylonitrile/styrene/butadiene copolymer], a polymethacrylate resin [e.g., polymethyl-methacrylate (PMMA), polyethylmethacrylic acid]
, a polyvinyl resin [e.g., polyvinyl acetate, a polyvinyl alcohol (PVA), a vinyl alcohol/ethylene copolymer (EVOH), polyvinylidene chloride (PDVC), polyvinylchloride (PVC), a vinyl chloride/vinylidene chloride copolymer, a vinylidene chloride/methylacrylate copolymer, a vinylidene chloride/acrylonitrile copolymer (ETFE)], a cellulose resin [e.g., cellulose acetate, cellulose acetate butyrate], a fluoride resin [e.g., polyvinylidene difluoride (PVDF), polyvinyl fluoride (PVF), polychlorofluoroethylene (PCTFE), a tetrafluoroethylene/ethylene copolymer], or an imide resin [e.g., an aromatic polyimide (PI)].

Furthermore, with the thermoplastic resin and the elastomer that configure the thermoplastic elastomer composition that can be used in the present invention, the above may be used as the thermoplastic resin. The elastomer to be used desirably includes a diene-based rubber and a hydrogenate thereof [e.g., natural rubber (NR), isoprene rubber (IR), epoxidized natural rubber, styrene butadiene rubber (SBR), butadiene rubber (BR, high cis-BR, low cis-BR), nitrile rubber (NBR), hydrogenated NBR, hydrogenated SBR], an olefin rubber [e.g., ethylene propylene rubber (EPDM, EPM), maleic acid ethylene propylene rubber (M-EPM), butyl rubber (IIR), an isobutylene and aromatic vinyl or diene-based monomer copolymer, acrylic rubber (ACM), an ionomer], a halogen-containing rubber [e.g., Br-IIR, CI-IIR, a brominated isobutylene-p-methylstyrene copolymer (BIMS), chloroprene rubber (CR), a hydrin rubber (CHR), chlorosulfonated polyethylene rubber (CSM), chlorinated polyethylene rubber (CM), chlorinated polyethylene rubber modified with maleic acid (M-CM)], a silicon rubber [e.g., methyl vinyl silicon rubber, dimethyl silicon rubber, methylphenyl vinyl silicon rubber], a sulfur-containing rubber [e.g., polysulfide rubber], a fluororubber [e.g., a vinylidene fluoride rubber, a vinyl ether rubber containing fluoride, a tetrafluoroethylene-propylene rubber, a silicon-based rubber containing fluoride, a phosphazene rubber containing fluoride], and a thermoplastic elastomer [e.g., a styrene elastomer, an olefin elastomer, an ester elastomer, a urethane elastomer, a polyamide elastomer].

In particular, 50% by weight or more of the elastomer is preferably halogenated butyl rubber, brominated isobutylene-p-methylstyrene copolymer rubber, or maleic anhydride modified ethylene a-olefin copolymer rubber in being able to increase a rubber volume ratio and soften and ruggedize from a low temperature to a high temperature.

Furthermore, 50% by weight or more of the thermoplastic resin in the thermoplastic elastomer composition is preferably nylon 11, nylon 12, nylon 6, nylon 6, nylon 66, a nylon 6/66 copolymer, a nylon 6/12 copolymer, a nylon 6/10 copolymer, a nylon 4/6 copolymer, a nylon 6/66/12 copolymer, an aromatic nylon, or an ethylene / vinyl alcohol copolymer in being able to achieve both air permeation prevention and durability.

Furthermore, when obtaining the blend by blending a combination of the specified thermoplastic resin described above and the specified elastomer described above, in a situation where compatibilities differ, both the thermoplastic resin and the elastomer can be made compatible by using an appropriate compatibility agent as a third component. By mixing the compatibility agent in the blend, interfacial tension between the thermoplastic resin and the elastomer is reduced, and as a result, the particle diameter of the elastomer that forms the dispersion phase becomes very small and thus the characteristics of both components is realized more effectively. This type of compatibility agent may generally have a structure of a copolymer having a structure of one or both of the thermoplastic resin and the elastomer, or a copolymer having an epoxy group, a carbonyl group, a halogen group, an amino group, an oxazoline group, and/or a hydroxy group or the like that is able to react with the thermoplastic resin or the elastomer. While the type of compatibility agent may be selected according to the type of thermoplastic resin and elastomer to be blended, such a compatibility agent generally includes: a styrene/ethylene butylene block copolymer (SEBS) or a maleic acid modified compound thereof; a EPDM, EPM, EPDM/styrene or EPDM/acrylonitrile graft copolymer or a maleic acid modified compound thereof; a styrene/maleic acid copolymer, or a reactive phenoxy, and the like. The blending quantity of such a compatibility agent, while not being limited, is preferably from 0.5 to 10 parts by weight per 100 parts by weight of the polymer component (total of the thermoplastic resin and the elastomer).

In the thermoplastic elastomer composition where the thermoplastic resin and the elastomer are blended, a composition ratio between the specified thermoplastic resin and elastomer is not limited in particular, is favorable if suitably decided so as to assume a structure where the elastomer is disposed as a discontinuous phase in a matrix of the thermoplastic resin, and a preferable range is a weight ratio of 90/10 to 30/70.

In the present invention, another polymer such as the compatibility agent can be mixed in with the thermoplastic elastomer composition that includes the thermoplastic resin or the blend that blends the thermoplastic resin and the elastomer in a range that does not impair a necessary characteristic as the inner liner. Objects of mixing in the other polymer are improving compatibility between the thermoplastic resin and the elastomer, making molding workability of the material favorable, improving heat resistance, reducing costs, and the like, and as a material used for these objects, for example, polyethylene (PE), polypropylene (PP), polystyrene (PS), ABS, SBS, polycarbonate (PC), and the like can be illustrated.

Furthermore, a reinforcing agent such as a filler (calcium carbonate, titanium oxide, alumina, and the like), carbon black, or white carbon, a softening agent, a plasticizer, a processing aid, a pigment, a dye, or an anti-aging agent generally compounded with polymer compounds may be optionally compounded so long as the characteristics required for an inner liner are not harmed. The thermoplastic elastomer composition assumes the structure where the elastomer is dispersed as the discontinuous phase in the matrix of the thermoplastic resin. By assuming this structure, a sufficient flexibility and, by an effect of a resin layer as a continuous phase, sufficient air permeation prevention can be imparted to the inner liner, and during molding, independent of an amount of the elastomer, molding workability equivalent to the thermoplastic resin can be obtained.

Furthermore, the elastomer can be dynamically vulcanized when being mixed in with the thermoplastic resin. A vulcanizer, a vulcanization assistant, vulcanization conditions (temperature, time), and the like, during the dynamic vulcanization can be determined as appropriate in accordance with the composition of the elastomer to be added, and are not particularly limited.

When the elastomer in the thermoplastic elastomer composition is dynamically vulcanized in this manner, the obtained resin film sheet becomes a sheet that includes a vulcanized elastomer; therefore, this sheet is preferable in that it has a resistance (elasticity) against deformation from the outside, maintains in particular recessed structures, and can reliably obtain the effect of the present invention.

Generally available rubber vulcanizers (crosslinking agents) can be used as the vulcanization agent. Specifically, as a sulfur-based vulcanizer, powdered sulfur, precipitated sulfur, highly dispersible sulfur, surface treated sulfur, insoluble sulfur, dimorpholine disulfide, alkylphenol disulfide, and the like can be illustrated, and, for example, about 0.5 to 4 phr (in the present specification, "phr" refers to parts by weight per 100 parts per weight of an elastomer component; same below) can be used.

Moreover, examples of an organic peroxide-based vulcanizer include benzoyl peroxide, t-butyl hydroperoxide, 2,4-dichlorobenzoyl peroxide, 2,5-dimethyl-2,5-di(t-butyl peroxy)hexane, and 2,5-dimethylhexane-2,5-di(peroxyl benzoate). Such an organic peroxide-based vulcanizer can be used in an amount of, for example, approximately 1 to 20 phr.

Furthermore, examples of a phenol resin-based vulcanizer includes brominated alkylphenol resins and mixed crosslinking system containing an alkyl phenol resin with a halogen donor such as tin chloride and chloroprene. Such a phenol resin-based vulcanizer can be used in an amount of, for example, approximately 1 to 20 phr.

As other examples, flowers of zinc (about 5 phr); magnesium oxide (about 4 phr); litharge (about 10 to 20 phr); p-quinone dioxime, p-dibenzoyl quinone dioxime, tetrachloro-p-benzoquinone, poly-p-dinitrosobenzene (about 2 to 10 phr); and methylenedianiline (about 0.2 to 10 phr) can be illustrated.

As necessary, a vulcanization accelerator may be added. As the vulcanization accelerator, approximately 0.5 to 2 phr, for example, of a generally available vulcanization accelerator of an aldehyde-ammonia base, a guanidine base, a thiazole base, a sulfenamide base, a thiuram base, a dithio acid salt base, a thiourea base, or the like can be used.

Specific examples include an aldehyde ammonia vulcanization accelerator such as hexamethylene tetramine and the like; a guanidine vulcanization accelerator such as diphenyl guanidine and the like; a thiazole vulcanization accelerator such as dibenzothiazyl disulfide (DM), 2-mercaptobenzothiazole and a Zn salt thereof; a cyclohexylamine salt, and the like; a sulfenamide vulcanization accelerator such as cyclohexyl benzothiazyl sulfenamide (CBS), N-oxydiethylene benzothiazyl-2-sulfenamide, N-t-butyl-2-benzothiazole sulfenamide, 2-(thymol polynyl dithio)benzothizole, and the like; a thiuram vulcanization accelerator such as tetramethylthiuram disulfide (TMTD), tetraethylthiuram disulfide, tetramethylthiuram monosulfide (TMTM), dipentamethylenethiuram tetrasulfide, and the like; a dithionate vulcanization accelerator such as Zn-dimethyl dithiocarbamate, Zn-diethyl dithiocarbamate, Zn-n-butyl dithiocarbamate, Zn-ethylphenyl dithiocarbamate, Te-diethyl dithiocarbamate, Cu-dimethyl dithiocarbamate, Fe-dimethyl dithiocarbamate, pipecoline pipecolyl dithiocarbamate, and the like; and a thiourea vulcanization accelerator such as ethylene thiourea, diethyl thiourea, and the like. Additionally, a vulcanization accelerator assistant generally used for a rubber can be used. For example, zinc white (approximately 5 phr), stearic acid, oleic acid and Zn salts thereof (approximately 2 to 4 phr), or the like can be used.

The method for producing the thermoplastic elastomer composition is as follows. The thermoplastic resin and the elastomer (unvulcanized in the case of rubber) are melt-kneaded in advance by a twin-screw kneader extruder or the like. The elastomer is dispersed as a dispersion phase (domain) in the thermoplastic resin forming a continuous phase (matrix). When the elastomer is vulcanized, the vulcanizer can be added during the kneading process to dynamically vulcanize the elastomer. Although the various compounding agents (except for the vulcanizer) may be added to the thermoplastic resin or the elastomer during the kneading process, it is preferable to premix the compounding agents before the kneading process. The kneader used for kneading the thermoplastic resin and the elastomer is not particularly limited. A screw extruder, kneader, Banbury Mixer, twin-screw kneader extruder, or the like can be used as the kneader. Among these, a twin-screw kneader extruder is preferably used for kneading the thermoplastic resin and the elastomer and for dynamically vulcanizing the elastomer. Furthermore, two or more types of kneaders can be used to successively knead the thermoplastic resin and the elastomer component. As a condition for the melt kneading, it is preferable that a temperature should equal to or higher than a melting temperature of the thermoplastic resin. Furthermore, a maximum shearing speed during the kneading process is preferably from 300 to 7,500 sec⁻¹. A total kneading time is from 30 seconds to 10 minutes. Additionally, when a vulcanizing agent is added, a vulcanization time after the addition is preferably from 15 seconds to 5 minutes. The polymer composition produced by the above method may be formed into a desired shape by a generally-used method for forming a thermoplastic resin such as injection molding and extrusion molding.

The thermoplastic elastomer composition thus obtained has a structure in which the elastomer is dispersed as a discontinuous phase in the matrix of the thermoplastic resin. By assuming this structure, when the sheet is used as the inner liner layer, the sufficient flexibility and the effect of the resin layer as the continuous phase allows sufficient air permeation prevention or strength to be imparted therewith, and during molding, independent of the amount of the elastomer, the molding workability equivalent to the thermoplastic resin can be obtained.

The Young's moduli of the thermoplastic resin and the thermoplastic elastomer composition are not particularly limited, but are preferably set to 1 to 500 MPa, and more preferably 25 to 250 MPa.

### EXAMPLES

The pneumatic tire of the present invention will be specifically described below by working examples and the like.

Note that the measuring methods of each evaluation characteristic are described below.

### (1) Evaluation of crack resistance of splice portion:

After performing a running test of eighty hours on a drum test machine at an internal pressure of 120 kPa, a load of 7.24 kN, and a speed of 81 km/h, evaluation was performed by observing a condition (generation count, size) of a presence or absence of generation of cracks in the tie rubber near the splice portion of the inner liner layer of the cavity of each test tire (ten each for each working example and the conventional example). Evaluation was performed with the result of Conventional Example 1 expressed as an index of 100 and a greater numerical value indicating greater crack resistance. The numerical value was determined to indicate "superior" at 5% or more and "remarkably superior" at 10% or more.

### (2) Evaluation of uniformity:

An RFV was measured and evaluated according to JASO C-607-87. An n-number was set as 10, and an average value thereof was taken and expressed as an index with the tire of Conventional Example 1 as 100. A greater numerical value indicates greater uniformity. The numerical value was determined to indicate "superior" at 2% or more and "remarkably superior" at 5% or more.

### (3) Failure during manufacturing

During manufacturing of each test tire (ten each for each working example and the conventional example), a condition of a presence or absence of generation of peeling and curling at the splice portion of the inner liner layer was observed and evaluated. Evaluation is performed with the result of Conventional Example 1 expressed as the index of 100, and a greater numerical value indicating a superior result.

### Working Examples 1 to 10, Conventional Example 1, Comparative Examples 1 to 3

As the test tire, ten test tires of a tire size of 195/65R15 91H (15x6J) having a tire structure of two belt layers and two carcass layers were made for each Working Example 1 to 10, Conventional Example 1, and Comparative Examples 1 to 3.

In each test tire, with the film whose main component is thermoplastic resin that forms the inner liner, N6/N66 was used as the thermoplastic resin, and brominated isobutylene-p-methyl styrene copolymer (BIMS) was used as the elastomer. These were blended, and a film of a thickness of 130 µm was used.

With the films of Working Examples 1 to 10 and Comparative Examples 1 to 3, the recess was formed by a process of repeatedly striking laser light on a portion of the films cut to respectively predetermined lengths by widths along the tire width direction at the end portion in the tire circumferential direction.

After forming the recess, each was joined to the tie rubber sheet of a thickness of 0.7 mm and having the composition shown in Table 1.

**[Table 1]**

| | | Parts by mass |
|---|---|---|
| Styrene butadiene rubber | "Nipol 1502" manufactured by Zeon Corporation | 50 |
| Natural rubber | SIR-20 | 50 |
| Carbon black | "Seast V" manufactured by Tokai Carbon Co., Ltd. | 60 |
| Stearic acid | Industrial stearic acid | 1 |
| Aromatic oil | "Desolex No. 3" manufactured by Showa Shell Sekiyu K.K. | 7 |
| Zinc oxide | "Aenhana No. 3" manufactured by Seido Chemical Industry Co., Ltd. | 3 |
| Modified resorcin formaldehyde condensate | "Sumikanol 620" manufactured by Taoka Chemical Co., Ltd. | 2 |
| Methylene donor | Modified etherified methylolmelamine ("Sumikanol 507AP" manufactured by Taoka Chemical Co., Ltd.) | 6 |
| Sulfur | 5% oil-extension treated sulfur | 6 |
| Vulcanization accelerator | Di-2-benzothiazolyl disulfide "NOCCELER-DM" manufactured by Ouchi Shinko Chemical Industrial Co., Ltd. | 2.2 |

For each of the overlap splice portions WS, an overlap splice portion length (L mm), a side cross-sectional shape of the splice portion vicinity, a surface area ratio (%) of the portion where the recess is formed, and the film thickness t of the portion where the recess is formed as a percentage (%) of a thickness T of the film (130 µm) are shown in Tables 2, 3.

For each test tire, results of evaluating the crack resistance of the splice portion and results of evaluating uniformity are shown in Tables 2, 3.

It can be seen that each pneumatic tire according to Working Examples 1 to 10 of the present invention is determined to be excellent in terms of overall performance in crack resistance, uniformity, and failures during manufacturing.

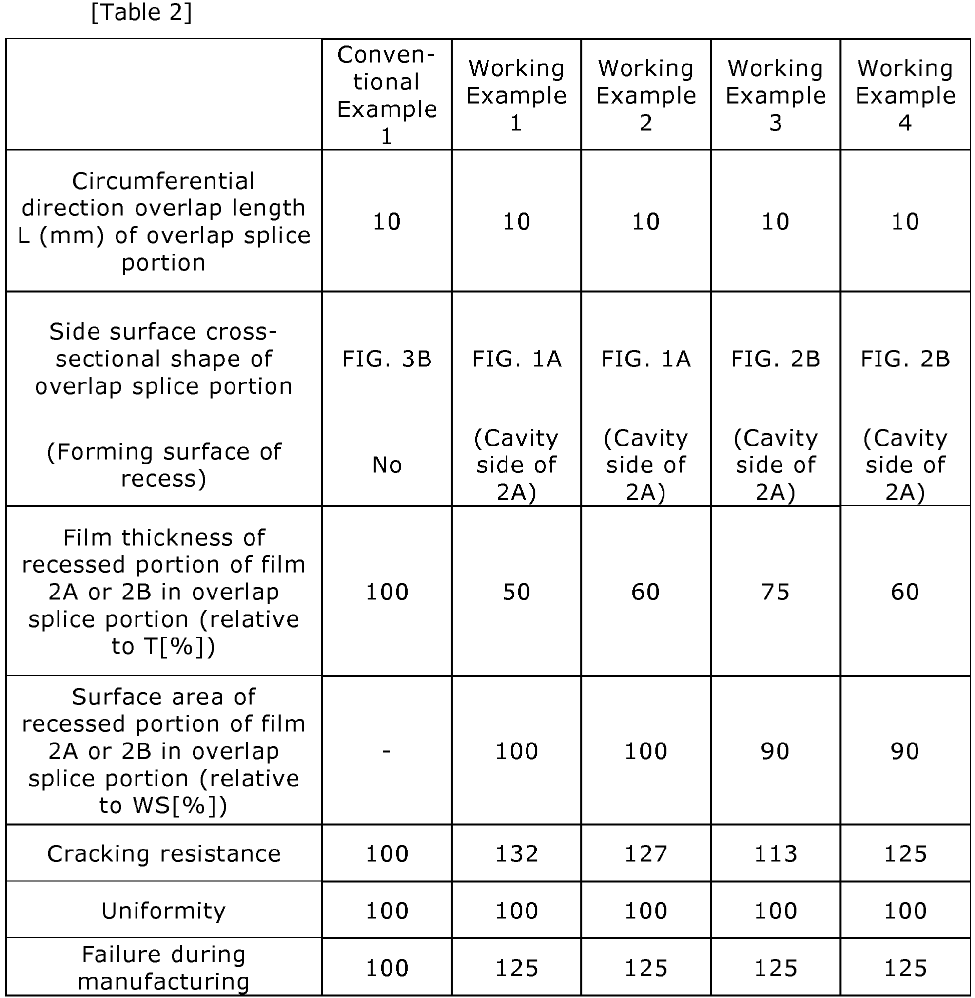

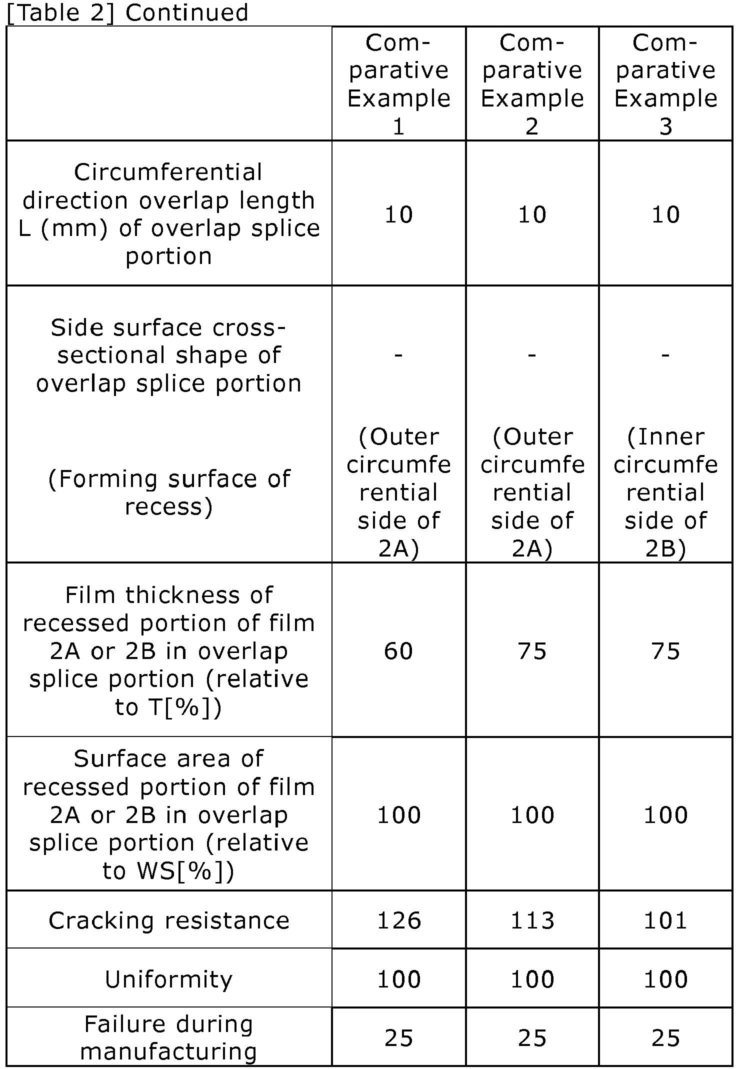

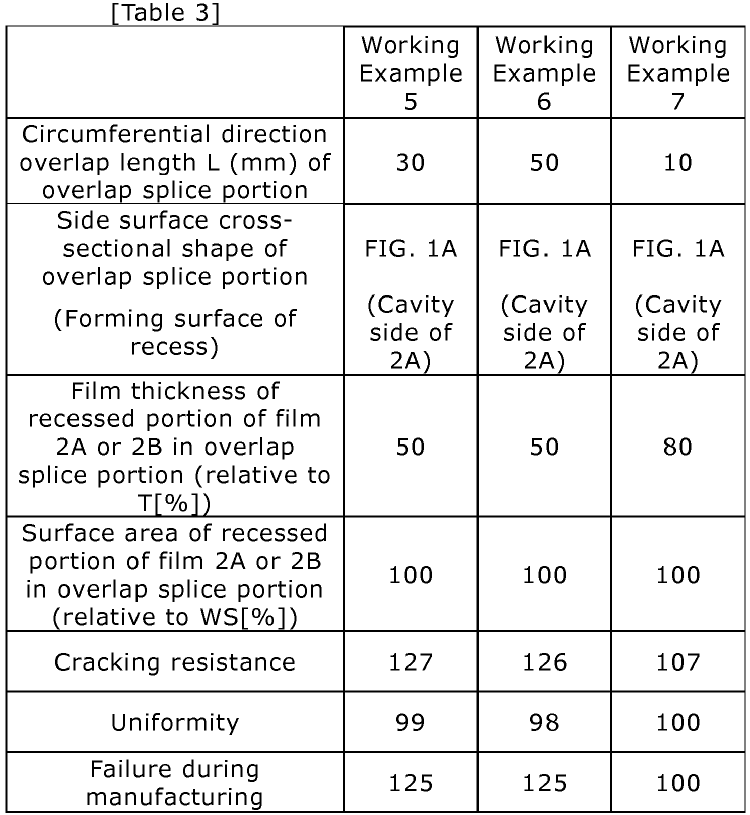

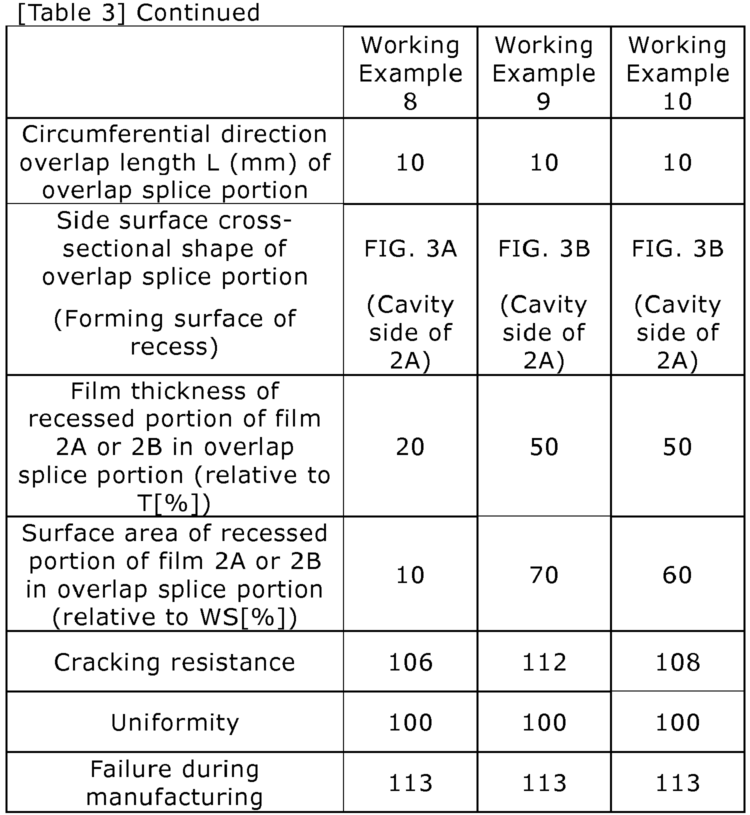

### REFERENCE NUMERALS

- 1: Laminated sheet
- 2: Film whose main component is thermoplastic resin
- 2A: Film positioned on tire cavity side in overlap splice portion
- 2B: Film positioned on tire outer circumferential side in overlap splice portion
- 3: Tie rubber layer
- 3': Tie rubber
- 4: Tip portion vicinity of film 2 whose main component is thermoplastic resin
- 5: Recess
- 10: Inner liner
- 11: Tread portion
- 12: Side wall portion
- 13: Bead
- 14: Carcass layer
- 15: Belt layer
- 16: Bead filler
- E-E: Tire width direction
- L: Overlap length of lap splice portion in circumferential direction
- WS: Overlap splice portion
- S: Lap splice part
- X-X: Tire circumferential direction

## Claims

1. A pneumatic tire, comprising:
an overlap splice portion (WS) in which an inner liner (10) configured from a film (2) whose main component is a thermoplastic resin is adhered to an inner side of a carcass layer (14) of a tire via a tie rubber sheet (3) and end portions in a tire circumferential direction (X-X) of the film overlap via a tie rubber across a tire width direction (E-E), the pneumatic tire satisfying the requirements of:
(a) a surface (2A0) on a tire outer circumferential side of the film (2, 2A) positioned on the tire cavity side in the overlap splice portion (WS) being formed flat between the overlap splice portion (WS) and the portions other than the overlap splice portion; and
(b) a surface (2BI) on a tire cavity side and a surface on a tire outer circumferential side (2B0) of a film (2, 2B) positioned on a tire outer circumferential side in the overlap splice portion (WS) being formed flat between the overlap splice portion (WS) and the portions other than the overlap splice portion (WS) **characterized in that** the tire further satisfies the requirement of:
(c) a surface on a tire cavity side of a film (2, 2A) positioned on a tire cavity side in the overlap splice portion (WS) being formed with a recess (5) so that a film (2, 2A) thickness (t) at the overlap splice portion (WS) becomes thinner than a film (2, 2a) thickness (TF) of portions other than the overlap splice portion.

2. The pneumatic tire according to claim 1, wherein
the recess (5) formed on the surface on the tire cavity side of the film (2, 2A) positioned on the tire cavity side in the overlap splice portion (WS) of (a) above is formed so that a thickness (t) of the film (2, 2A) at the overlap splice portion (WS) is to be from 20 to 80% of a thickness (TF) of the film (2) of the portions other than the overlap splice portion.

3. The pneumatic tire according to claim 1 or 2, wherein
an overlap length (L) in a circumferential direction (X-X) of the overlap splice portion (WS) is from 3 to 30 mm.

4. The pneumatic tire according to any one of claims 1 to 3, wherein
a surface area of a portion formed with the recess (5) on the surface on the tire cavity side of the film (2, 2A) positioned on the tire cavity side in the overlap splice portion (WS) is 10% or more and 100% or less than a surface area of the overlap splice portion (WS).

5. The pneumatic tire according to any one of claims 1 to 4, wherein
the portion formed with the recess (5) on the surface on the tire cavity side of the film (2, 2A) positioned on the tire cavity side in the overlap splice portion (WS) is present at least between a belt end portion (15) and an end portion in an outer circumferential side of a bead filler portion (16) on a tire meridian section.

6. The pneumatic tire according to any one of claims 1 to 5, wherein
the recess (5) is formed by a process using a laser light.

## Patentansprüche

1. Luftreifen, umfassend:
einen Überlappungsspleißabschnitt (WS), in dem eine Innenseele (10), die aus einer Folie (2), deren Hauptbestandteil thermoplastisches Harz ist, konfiguriert ist, an eine Innenseite einer Karkassenschicht (14) eines Reifens über eine Verbindungsgummiunterlage (3) und an Endabschnitte in Reifenumfangsrichtung (X-X) der Folienüberlappung über einen Verbindungsgummi in Reifenbreitenrichtung (E-E) angeklebt ist, wobei der Luftreifen die folgenden Anforderungen erfüllt:
(a) eine Oberfläche (2AO) auf einer äußeren Reifenumfangsfläche der Folie (2,2A), die auf der Seite des Reifen-Hohlraums im Überlappungsspleißabschnitt (WS) positioniert und flach zwischen dem Überlappungsspleißabschnitt (WS) und den anderen Abschnitten mit Ausnahme des Überlappungsspleißabschnitts ausgebildet ist; und
(b) eine Oberfläche (2BI) auf einer Seite eines Reifen-Hohlraums und eine Oberfläche auf einer äußeren Reifenumfangsfläche (2BO) einer Folie (2, 2B), die auf einer äußeren Reifenumfangsfläche im Überlappungsspleißabschnitt (WS) positioniert und flach zwischen dem Überlappungsspleißabschnitt (WS) und den anderen Abschnitten mit Ausnahme des Überlappungsspleißabschnitts (WS) ausgebildet ist, **dadurch gekennzeichnet, dass** der Reifen ferner die folgende Anforderung erfüllt:
(c) eine Oberfläche auf einer Seite des Reifen-Hohlraums einer Folie (2, 2A), die auf einer Seite des Reifen-Hohlraums im Überlappungsspleißabschnitt (WS) positioniert und mit einer Vertiefung (5) ausgebildet ist, sodass eine Dicke (t) der Folie (2, 2A) am Überlappungsspleißabschnitt (WS) dünner als eine Dicke (TF) der Folie (2, 2a) von anderen Abschnitten mit Ausnahme des Überlappungsspleißabschnitts wird.

2. Luftreifen nach Anspruch 1, wobei
die Vertiefung (5), die auf der Oberfläche auf der Seite des Reifen-Hohlraums auf der Folie (2, 2A), die auf der Seite des Reifen-Hohlraums im Überlappungsspleißabschnitt (WS) von (a) oben positioniert ist, ausgebildet ist, so ausgebildet ist, dass eine Dicke der Folie am Überlappungsspleißabschnitt (WS) zwischen 20 und 80 % einer Dicke (TF) der Folie (2) der Abschnitte mit Ausnahme des Überlappungsspleißabschnitts liegen muss.

3. Luftreifen nach Anspruch 1 oder 2, wobei
eine überlappende Länge (L) in Umfangsrichtung (X-X) des Überlappungsspleißabschnitts (WS) zwischen 3 und 30 mm liegt.

4. Luftreifen nach einem der Ansprüche 1 bis 3, wobei
eine Fläche eines Abschnitts, der mit der Vertiefung (5) auf der Oberfläche auf der Seite des Reifen-Hohlraums der Folie (2, 2A) ausgebildet ist, die auf der Seite des Reifen-Hohlraums im Überlappungsspleißabschnitt positioniert ist, 10 % oder mehr und 100 % oder weniger als eine Fläche des Überlappungsspleißabschnitts (WS) beträgt.

5. Luftreifen nach einem der Ansprüche 1 bis 4, wobei
der mit der Vertiefung (5) auf der Oberfläche auf der Seite des Reifen-Hohlraums der Folie (2, 2A) ausgebildete Abschnitt, der auf der Seite des Reifen-Hohlraums im Überlappungsspleißabschnitt (WS) positioniert ist, mindestens zwischen einem Abschnitt des Bandendes (15) und einem Endabschnitt in einer äußeren Umfangsfläche eines Wulstfüllerabschnitts (16) auf einem Meridianabschnitt des Reifens vorhanden ist.

6. Luftreifen nach einem der Ansprüche 1 bis 5, wobei
die Vertiefung (5) durch ein Verfahren unter Verwendung eines Laserlichts ausgebildet wird.

## Revendications

1. Bandage pneumatique comprenant :
une partie de raccord en chevauchement (WS) dans laquelle un revêtement interne (10) conçu à partir d'un film (2) dont le composant principal est une résine thermoplastique est fixé par adhérence à un côté interne d'une couche de carcasse (14) d'un bandage par le biais d'une feuille de caoutchouc de lien (3) et des parties d'extrémité dans une direction circonférentielle du bandage (X-X) du film se chevauchent par le biais d'un caoutchouc de lien à travers une direction de la largeur du bandage (E-E), le bandage pneumatique satisfaisant les exigences suivantes :
(a) une surface (2AO) sur un côté circonférentiel externe de bandage du film (2,2A) positionnée sur le côté cavité du bandage dans la partie de raccord en chevauchement (WS) étant formée plate entre la partie de raccord en chevauchement (WS) et les parties autres que la partie de raccord en chevauchement ; et
(b) une surface (2BI) sur un côté cavité du bandage et une surface sur un côté circonférentiel externe du bandage (2BO) d'un film (2, 2B) positionnée sur un côté circonférentiel externe du bandage dans la partie de raccord en chevauchement (WS) étant formée plate entre la partie de raccord en chevauchement (WS) et les parties autres que la partie de raccord en chevauchement (WS), **caractérisé en ce que** le bandage satisfait en outre l'exigence suivante :
(c) une surface sur un côté cavité du bandage d'un film (2, 2A) positionnée sur un côté cavité du bandage dans la partie de raccord en chevauchement (WS) étant formée avec un évidement (5) de sorte qu'une épaisseur (t) du film (2, 2A) au niveau de la partie de raccord en chevauchement (WS) devient plus fine qu'une épaisseur (TF) de film (2, 2a) des parties autres que la partie de raccord en chevauchement.

2. Bandage pneumatique selon la revendication 1, dans lequel l'évidement (5) formé sur la surface sur le côté cavité du bandage du film (2, 2A) positionné sur le côté cavité du bandage dans la partie de raccord en chevauchement (WS) de (a) ci-dessus est formé de sorte qu'une épaisseur du film au niveau de la partie de raccord en chevauchement (WS) est comprise entre 20 et 80 % d'une épaisseur (TF) du film (2) des parties autres que la partie de raccord en chevauchement.

3. Bandage pneumatique selon la revendication 1 ou 2, dans lequel une longueur de chevauchement (L) dans une direction circonférentielle (X-X) de la partie de raccord en chevauchement (WS) va de 3 à 30 mm.

4. Bandage pneumatique selon l'une quelconque des revendications 1 à 3, dans lequel
une superficie d'une partie formée avec l'évidement (5) sur la surface sur le côté cavité du bandage du film (2, 2A) positionnée sur le côté cavité du bandage dans la partie de raccord en chevauchement est 10 % ou plus et 100 % ou moins qu'une superficie de la partie de raccord en chevauchement (WS).

5. Bandage pneumatique selon l'une quelconque des revendications 1 à 4, dans lequel
la partie formée avec l'évidement (5) sur la surface sur le côté cavité du bandage du film (2, 2A) positionnée sur le côté cavité du bandage dans la partie de raccord en chevauchement (WS) est présente au moins entre une partie d'extrémité de ceinture (15) et une partie d'extrémité dans un côté circonférentiel externe d'une partie bourrage sur tringle (16) sur une section méridienne du bandage.

6. Bandage pneumatique selon l'une quelconque des revendications 1 à 5, dans lequel
l'évidement (5) est formé par un processus utilisant une lumière laser.
